# EUROPEAN PATENT SPECIFICATION

(11) **EP 0 364 659 B1**
(45) Date of publication and mention of the grant of the patent: **10.03.1993**
(21) Application number: 89108931.0
(22) Date of filing: 18.05.1989
(51) Int. Cl.: B01D 3/38

(54) **Method for rectification and apparatus therefor**
Rektifikationsverfahren und Vorrichtung dafür
Procédé et dispositif de rectification

(30) Priority: 21.10.1988 JP 265376/88
(43) Date of publication of application: 25.04.1990
(73) Proprietor: NKK CORPORATION, Tokyo (JP); Naka, Yuji, Isogo-ku, Yokohama (JP)
(72) Inventor: Naka, Yuji, Yokohama (JP); Sato, Tatsuo Patent & License and Quality, Marunouchi Chiyoda-ku Tokyo (JP); Kawashima, Akihiro Patent & License and Quality, Marunouchi Chiyoda-ku Tokyo (JP)
(74) Representative: Füchsle, Klaus, Dipl.-Ing.

(56) References cited:
- EP-A- 0 235 422
- US-A- 3 412 016
- US-A- 3 881 994

## Description

The present invention relates to a method for rectification and an apparatus therefor.

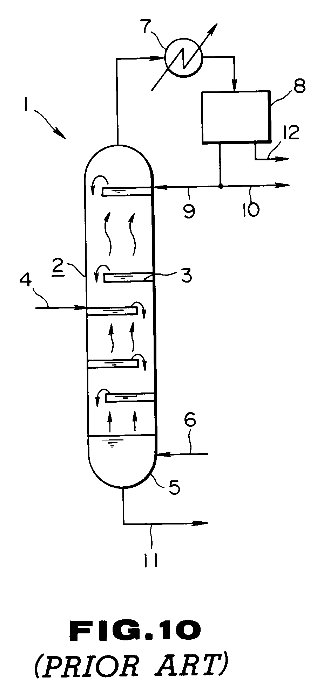

Fig. 10 is an explanatory view of a prior art rectifying column. Prior art rectifying column 1 will be described with specific reference to Fig.10. A plurality of plates are arranged inside column body 2. Raw material feeding pipe 4 is mounted on the middle level of said column. Steam pipe 6 for heating hold-up is connected to bottom portion 5 of said column. On the other hand, reflux tank 8 is provided for condensing vapor from the top of said column and refluxing a part of the resultant by condensing the vapor. In reflux tank 8, there are arranged refluxing pipe 9 for refluxing condensed components of a low boiling point, offtake pipe 10, through which a product is taken out, and drain pipe 12 for draining condensed water. Further, there is arranged a second offtake pipe 11 for taking out components of a high boiling point as bottoms from bottom portion 5 of said column.

The function rectifying column 1 constituted in such a manner as described above will be explained. A hold-up is heated by blowing a steam from steam pipe 6 in bottom portion 5 of said column 1. A part of said hold-up is made to rise as a vapor and brought into counter-current contact with a refluent fluid from the upper side of said column on each plate 3 thereof. In this way, condensation of the vapor and revaporization of a liquid obtained by the condensation of the vapor are repeatedly carried out. Components of a low boiling point are taken out from the top of the column. A distillate condensed by means of condenser 7 is charged into reflux tank 8. Water obtained by condensing vapor is discharged from drain pipe 12. A part of the distillate is returned through refluxing pipe 9 to column body 2 and the other part thereof is recovered as a top-product through offtake pipe 10. Further, components of a high boiling point as bottoms are taken out from bottom portion 5 of the column through the second offtake pipe 11.

It is an object of the present invention to decrease the energy required for evporation of raw materials in a rectifying column and to reduce the costs of rectification.

To accomplish said object, the present invention provides a method for rectification comprising the steps of;
supplying raw materials to a rectifying column from a raw material feed pipe arranged on the middle level of said column;
returning a refluent fluid from a refluxing pipe arranged in the upper portion of said column to said column;
leading a hold-up from a bottom tank having a higher surface of a liquid to a bottom tank having a lower surface of a liquid in a bottom portion of said column, said bottom portion being divided into at least two bottom tanks and said bottom tanks having different surface of the liquids,
heating said hold-up in each of said bottom tanks;
exchanging heat by bringing vapor produced by heating the hold-up into counter-current contact with the refluent liquid returned to the rectifying column on plates arranged in said rectifying column and raw material fed on the middle level of said column, the refluent liquid from the lowest plate flowing toward the bottom tank having a higher surface of the liquid;
taking out vapor from the top of said rectifying column, said vapor being cooled, a part of said vapor being taken out as a product and the rest of the vapor being used as the refluent liquid; and
taking out the hold-up from the bottom tank having the lower surface of the liquid.

Further, the present invention provides an apparatus for rectification comprising:
a rectifying column having a raw material feed pipe in the middle level thereof, an offtake pipe for taking out the vapor from the top of the rectifying column, a reflux pipe for returning the refluent liquid to the inside of said column in the upper portion of the rectifying column and plates for exchanging heat by bringing the vapor into contact with the refluent liquid and the raw material;
a bottom portion, which is divided into at least two bottom tanks having overflow surfaces different in height, wherein the refluent liquid from the lowest plate flows toward the bottom tank having the higher overflow surface and the refluent liquid flows from the tank having the higher overflow surface to the tank having the lower overflow surface;
means for heating the hold-up in each of the bottom tanks; and
an offtake pipe for taking out bottoms from the bottom tank having the lowest surface of liquid.

The above objects and other objects and advantages of the present invention will become apparent from the detailed description to follow, taken in connection with the appended drawings.
Fig.1 is a conceptual illustration of a rectifying apparatus of the present invention;
Fig.2 is a graphical representation indicating the relation between a steam rate blown in an upper bottom tank and the total steam rate of the present invention;
Fig.3 is a graphical representation indicating the relation between a steam rate blown in the upper bottom tank and a top production amount of the present invention;
Fig.4 is a graphical representation showing the relation between a steam rate blown in the upper bottom tank and a reflux ratio of the present invention;
Fig.5 is a graphical representation designating the relation between a steam rate blown in the upper bottom tank and a temperature of the top of the rectifying column of the present invention;
Fig.6 is a graphical representaton designating the relation between a steam rate blown in the upper bottom tank and a temperature of the bottom of the rectifying column of the present invention;
Fig.7 is a conceptual illustration of the other rectifying column of the present invention;
Fig.8 is a conceptual illustration of a further rectifying column of the present invention;
Fig.9 is a sectional view schematically showing plates with a plurality of dams of the rectifying column and the bottom tanks of the present invention; and
Fig.10 is a conceptual illustration of a rectifying apparatus of a prior art example.

Even in a rectification plant, energy saving is an important problem. Therefore, there has been hitherto conducted a study on a rectification apparatus which calculates the total effect of energy saving inclusive of associated installations such as a flow change type apparatus wherein a raw material blow-in position is taken into consideration, or a waste-heat recovery type apparatus by use of a heat exchanger. These installations, however, are required for the prior art type apparatuses such that operations with the prior art type apparatuses are complicated.

In the method for rectification and the apparatus therefor of the present invention, a great effect can be produced by a simple change of the apparatus. That is to say, a bottom portion of the prior art type apparatus holding hold-up is divided into a plurality of bottom tanks. Differences in levels of the surfaces of an overflowing liquid in each of the bottom tanks are made so that the overflowing liquid can flow successively downward from the highest bottom tank to the lowest bottom tank. Any hold-up in the bottom tank located upper than the lowest bottom tank is richer in components of low boiling point at least than the hold-up in the lowest bottom tank. Accordingly, in the bottom tanks located higher than the lowest bottom tank, the components of low boiling point can be evaporated by the amount of heating medium smaller than in the lowest bottom tank. As a result, the energy saving can be accomplished. That is to say, an entropy loss is produced by mixing of fluids of different components, but a separation capability of a separation system is increased by a decrease of the entropy loss.

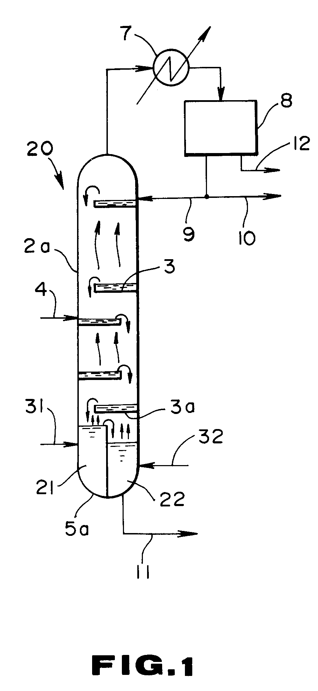

An example of the apparatus of the present invention will be described below with specific reference to Fig.1. A description of the same elements of said apparatus as that of the prior art apparatus shown in said Fig.10 will be omitted, the same symbols being used for the same elements of the apparatus of the present invention as that of the prior art apparatus.

Rectifying apparatus 20 of the present invention is different from the prior art rectifying apparatus in bottom portion 5a of column body 2a. To simplify the description, a case in which bottom portion 5a is divided into bottom tanks 21 and 22 will be described. An overflowing fluid flows from lowest plate 3a of the column in upper bottom tank 21. The overflowing fluid from upper bottom tank 21 flows into lower bottom tank 22. A hold-up is taken out from lower bottom tank 22 through second offtake pipe 11. On the other hand, a heating medium piping for heating the hold-up inside the tanks, for example, steam pipes 31 and 32 are connected to bottom tanks 21 and 22 respctively to blow steam into bottom tanks 21 and 22. Plates 3, raw material feed pipe 4, condenser 7, reflux tank 8, refluxing pipe 9, drain pipe 12, first offtake pipe 10 and second offtake pipe 11 which are arranged in column body 20 have the same constitution as that of the prior art example and the same function as that of the prior art example.

There was conducted a simulation test on a steam rectification apparatus, wherein a material consisting of 21 components including 20 components ranging from benzene to anthracene and water are supplied from the raw material feed pipe to said apparatus, and three components consisting of benzene, toluene and xylene as distillate and components other than said three components as bottoms were taken out of lowest bottom tank 22.

In said simulation, the flow rate B of steam to be fed to upper bottom tank 21 was increased stepwise from 10 to 100 kg mol/h. The volume of upper bottom tank 21 was the same as the volume of lower bottom tank 22. The flow rate A of steam to be fed to lower bottom tank 22 and the reflux ratio [(the flow rate in reflux pipe /( the flow rate in first offtake pipe 10 ) ] were controlled so that the composition of the top of the column can be 96.0% and the composition of the bottom of the column 0.35% in the slim of mol fractions of benzene, toluene and xylene.

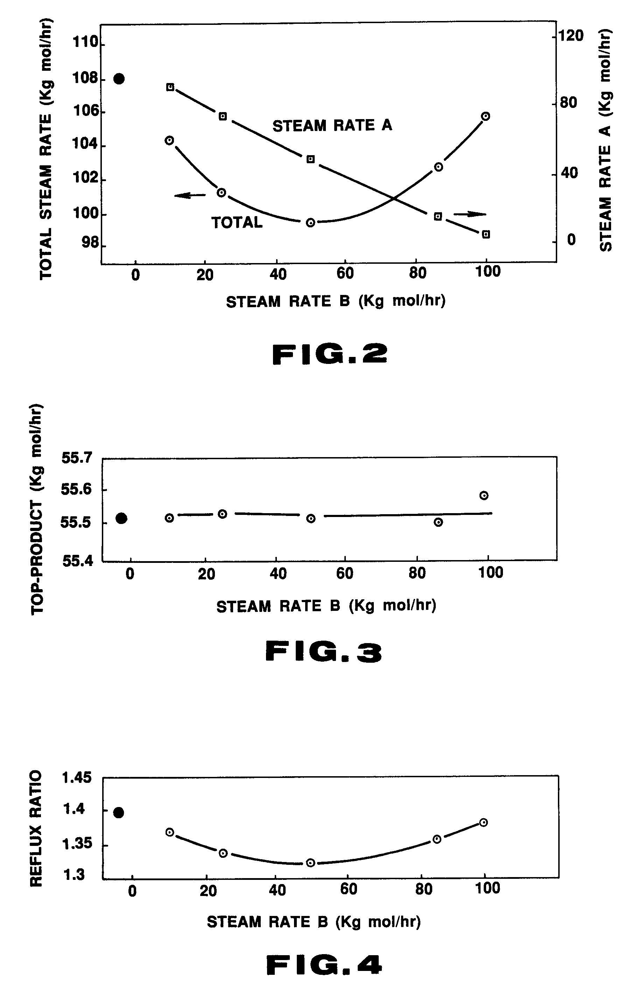

The results of the above-mentioned simulation will be shown in graphical representaitons of Figs.2 to 6 compared with values in the prior art example of Fig.10. The values acccording to the prior art method will be shown with symbol ●.

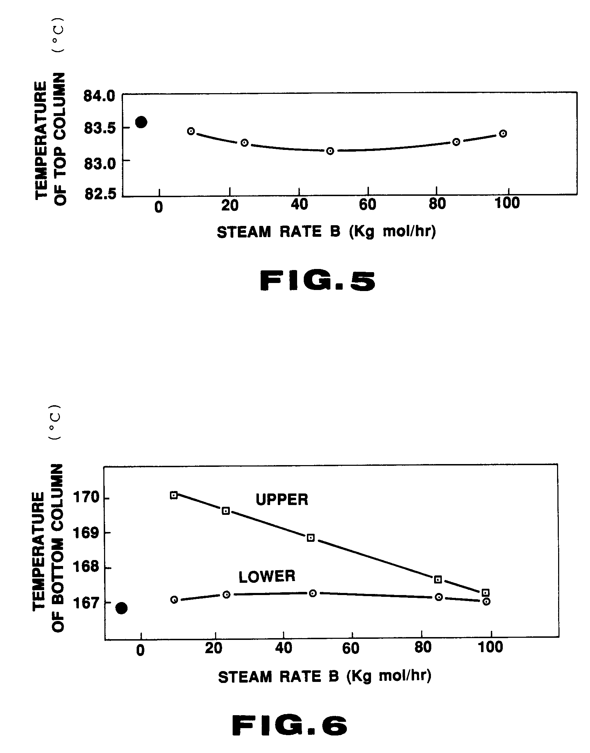

In Figs.2 to 6, the flow rate B of steam is represented on the abscissa. In Fig.2, the total flow rate of steam and the flow rate A of steam are represented on the ordinate. In Fig.3, the amount of the product obtained from the first offtake pipe is represented on the ordinate. In Fig.4, the reflux ratio is represented on the ordinate. In Fig.5, the temperature of the top of the column is represented on the ordinate. In Fig.6, the temperature of the bottom of the column is represented on the ordinate. The values of the prior art example are shown with symbol ● at the left end of the graphical representations. The values of the prior art example have nothing to do with the flow rate B of steam since the bottom tank is not divided.

As shown in Fig.2, the lowest value of the total amount of steam is approximately 99 kg mol/h in case of using the method of the present invention while the total amount of steam is approximately 108 kg mol/h in the prior art example wherein the button portion of the column is not divided. Therefore, approximately 8.3% of energy is saved in the method of the present invention. Fig.2 also shows that, when the flow rate A of steam is substantially equal to the flow rate B of steam, the total amount of steam becomes the lowest value.

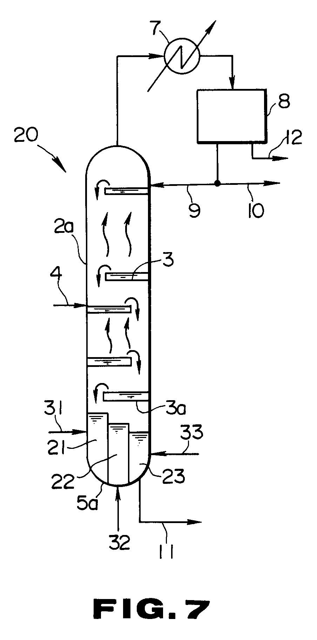

In said example, the case that the bottom portion was divided into two bottom tanks was explained. The bottom portion, however, can be divided into more than two. As the result of a simulation for which the bottom portion was divided into three bottom tanks under the same conditions as mentioned above, the lowest value of the total amount of steam was approximately 95.8 kg mol/h while the total amount of steam was approximately 108 kg mol/h in the prior art example. In the case that the bottom portion was divided into three, 11.3% of energy was saved. This case results in a better effect than the effect of the case in which the bottom portion was divided into two tanks. Fig.7 is a conceptual illustration designating a rectifying apparatus the bottom portion of which is divided into three bottom tanks. There are three bottom tanks 21, 22 and 23 having the surfaces of liquids different in height. Steam is blown into each of said three bottom tanks 21, 22 and 23 from steam pipes 31, 32 and 33. An overflowing fluid in the highest bottom tank 21 flows to bottom tanks 22 and 23 successively. Bottoms are then out of the lowest bottom tank 23 through second offtake pipe 11. A heating energy of 0.8 to 1.2 E/N is supplied to one bottom tank when the total heating energy supplied to the hold-up is E and the number of bottom tanks are N.

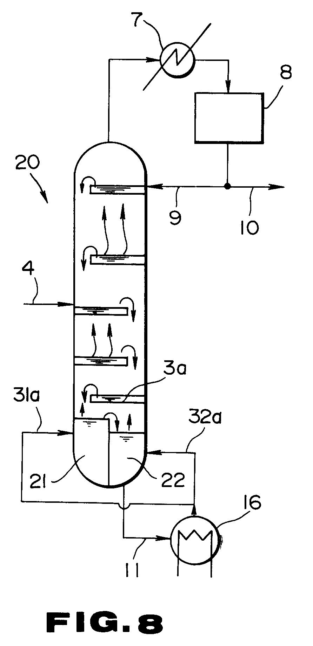

Fig.8 is a schematic illustration of a rectifying apparatus of the second example different from the first example described with specific reference to Fig.1. In the second example, reboiler 16 for heating bottoms from second offtake pipe 11 is mounted on the rectifying apparatus and the bottoms are heated by returning vapor of the heated bottoms to bottom tanks 21 and 22. The effect of the energy saving is also seen in said rectifying apparatus as in the rectifying apparatus of Fig.1.

Since the steam as an example of a heating medium does not come in contact with a raw material and a refluent fluid in the second example, the second example can be used in the case where the raw material has the possibility of dissolving and deteriorating due to its contact with the steam. On the other hand, in the first example, since the steam is introduced into the rectifying column, the first example has the advantage that the partial pressure of components of low boiling point to be taken out as a product decreases and, in this connecton, the temperature for heating the bottom tanks can be lowered to obtain the same amount of evaporated components. Accordingly, the first example can produce a high effect, being applied to the raw material having the possibility of deteriorating when the temperature is raised.

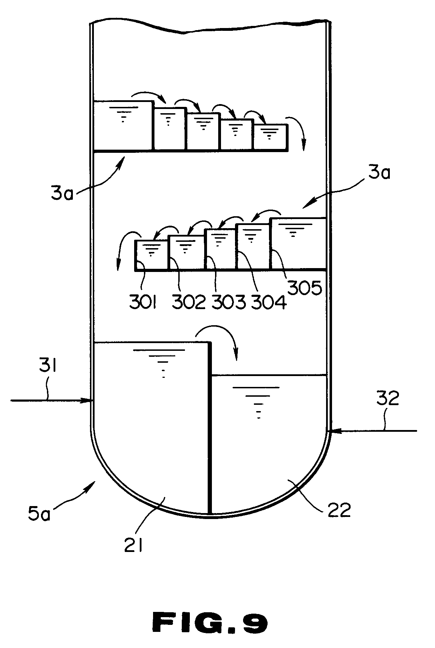

Fig.9 is a sectional view of the column designating plates 3a, on which a plurality of dams 301 to 305 having different heights are mounted, in the first example. Dams 301 to 305 are mounted on plates 3a so that they can grow higher in this order. As shown with arrow symbols, the overflowing fluid passes over dams 305, 304, 303, 302 and 301 successively and falls on a lower plate or on the bottom portion of the column. The plates are arranged so that when the overflowing fluid falls on the lower plate, it can flow into the internal side of the highest dam of the lower plate, and when the overflowing fluid falls from the lowest plate into the bottom of the column, it can fall on the bottom tank having the highest surface level of liquid.

In this way, in the case when a plurality of the dams are arranged on the plates, the total amount of steam is decreased and the energy can be saved as much as in the case where the bottom portion is divided into a plurality of bottom tanks in comparison with the case where dam 301 is arranged only at the end of a plate.

It is naturally possible in the second example to obtain an effect of energy saving by use of the plates, on which a plurality of dams are arranged.

## Claims

1. A method for rectification
comprising steps of:
supplying raw materials to a rectifying column (2a) from a raw material feed pipe (4) arranged on the middle level of said column (2a);
returning a refluent fluid from a refluxing pipe (9) arranged in the upper portion of said column (2a) to said column (2a);
taking out vapor from the top of said rectifying column (2a), said vapor being cooled, a part of said vapor being taken out as a product and the rest of the vapor being used as the refluent liquid; and
taking out bottoms from a bottom portion (5a);
**characterized** by leading a hold-up to flow from a bottom tank (21) having a higher surface of a liquid to a bottom tank (22) having a lower surface of a liquid in said bottom portion (5a) of said column (2a), said bottom portion being divided into at least said two bottom tanks (21, 22);
heating said hold-up in each of bottom tanks (21,22);
exchanging heat by bringing a vapor produced by heating the bottom into counter-current contact with the refluent liquid returned to the rectifying column (2a) on plates (3, 3a) arranged in said rectifying column (2a), the refluent liquid from the lowest plate (3a) flowing toward the bottom tank (21) having a higher surface of the liquid.

2. The method of claim 1,
**characterized** in that said heating means of the hold-up is a heating for which a heating energy of 0.8 to 1.2 E/N is supplied to one bottom tank wherein the total heating energy supplied to the hold-up is E and the number of bottom tanks (21, 22) are N.

3. The method of claims 1 or 2,
**characterized** in that said heating of the hold-up includes heating by blowing a heating medium in the form of vapor in each of the bottom tanks.

4. The method of claim 3,
**characterized** in that said heating medium is steam.

5. The method of claim 1,
**characterized** in that said heating of the hold-up includes heating of the hold-up by use of a reboiler (16) arranged outside the rectifying column (2a) and by returning vapor of the hold-up into the bottom tanks (21, 22).

6. An apparatus (20) for rectification
comprising:
a rectifying column (2a) having a raw material feed pipe (4) in the middle stage thereof, an offtake pipe for taking out the vapor from the top of the rectifying column (2a), a reflux pipe (9) for returning the refluent liquid to the inside of said column (2a) in the upper portion of the rectifying column (2a) and plates (3, 3a) for exchanging heat by bringing the vapor into contact with the refluent liquid; and
an offtake pipe (11) for taking out the bottoms from a bottom portion (5a),
**characterized** in that the bottom portion (5a) is divided into at least two bottom tanks (21, 22) having overflow surfaces different in height, wherein the refluent liquid from the lowest plate (3a) flows toward the bottom tank (21) having a higher overflow surface and the refluent liquid flows from the tank (21) having the higher overflow surface into the tank (22) having the lower overflow surface; and
means for heating the hold-up in each of the bottom tanks (21, 22).

7. The apparatus of claim 6,
**characterized** in that said means for heating said hold-up comprises a steam piping (31, 32) for blowing steam in each of the bottom tanks (21, 22).

8. The apparatus of claim 6,
**characterized** in that said means for heating said hold-up comprises a reboiler (16) for heating a hold-up taken out of an offtake pipe (11), said reboiler (16) being arranged outside the rectifying column (2a), and a steam piping (31a, 32a) for blowing the vapor of hold-up heated by said reboiler (16) in each of the bottom tanks (21, 22).

9. The apparatus of claim 6, 7 or 8,
**characterized** in that said plates have a plurality of dams (301-305) different in height, an overflowing fluid passes over said dams successively.

10. The apparatus of any of claims 6 to 9,
**characterized** in that the bottom portion (5a) of the column (2a) is divided into three tanks (21, 22, 23).

## Patentansprüche

1. Rektifizierverfahren mit den Schritten:
Zuführen von Rohmaterialien an eine Rektifiziersäule (2a) von einer Rohmaterial-Zuführungsleitung (4), die an dem mittleren Niveau der Kolonne (2a) angeordnet ist;
Rückführen einer Rückfluß-Flüssigkeit von einer Rückflußleitung (9), die angeordnet ist in dem oberen Abschnitt der Kolonne (2a), an die Kolonne (2a);
Abnehmen von Dampf von dem Oberteil der Rektifiziersäule (2a), wobei der Dampf gekühlt wird, ein Teil des Dampfs abgenommen wird als Produkt und der Rest des Dampfs benutzt wird als die Rückfluß-Flüssigkeit; und
Abnehmen von Bodenrückständen aus einem Bodenabschnitt (5a);
gekennzeichnet durch
Leiten einer Füllmenge, um von einem Bodentank (21) mit einer höheren Oberfläche einer Flüssigkeit zu einem Bodentank (22) mit einer niedrigen Oberfläche einer Flüssigkeit in dem Bodenabschnitt (5a) der Kolonne (2a) zu fließen, wobei der Bodenabschnitt geteilt ist in mindestens zwei Bodentanks (21, 22);
Heizen der Füllmenge in jedem der Bodentanks (21, 22);
Austauschen von Wärme durch Bringen eines Dampfs, der erzeugt wird durch Heizen des Bodens, in Gegenstromkontakt mit der Rückfluß-Flüssigkeit, die zurückgeführt wird an die Rektifiziersäule (2a) auf Platten (3, 3a), die in der Rektifiziersäule (2a) angeordnet sind, wobei die Rückfluß-Flüssigkeit der untersten Platte (3a) in den Bodentank (21) fließt, der eine höhere Oberfläche der Flüssigkeit hat.

2. Verfahren nach Anspruch 1, dadurch gekennzeichnet, daß die Heizeinrichtung der Füllmenge eine Heizeinrichtung ist, bei der eine Heizenergie von 0,8 bis 1,2 E/N zugeführt wird an einen Bodentank, wobei die totale Heizenergie, die der Füllmenge zugeführt wird, E ist und die Anzahl an Bodentanks (21, 22) N ist.

3. Verfahren nach Anspruch 1 oder 2, dadurch gekennzeichnet, daß das Heizen der Füllmenge ein Heizen durch Einblasen eines Heizmediums in Form von Dampf in jeden der Bodentanks beinhaltet.

4. Verfahren nach Anspruch 3, dadurch gekennzeichnet, daß das Heizmedium Dampf ist.

5. Verfahren nach Anspruch 1, dadurch gekennzeichnet, daß das Heizen der Füllmenge ein Heizen der Füllmenge unter Benutzung eines Aufkochers (16) beinhaltet, der angeordnet ist außerhalb der Rektifiziersäule (2a) und mittels Rückführen von Dampf der Füllmenge in die Bodentanks (21, 22) durchgeführt wird.

6. Rektifiziervorrichtung (20) mit:
einer Rektifiziersäule (2a) mit einer Rohmaterial-Zuführungsleitung (4) in den mittleren Abschnitt davon, einer Abnahmeleitung zum Abnehmen des Dampfs von dem Oberteil der Rektifiziersäule (2a), einer Rückflußleitung (9) zum Zurückführen der Rückfluß-Flüssigkeit in das Innere der Kolonne (2a) im oberen Abschnitt der Rektifiziersäule (2a) und Platten (3, 3a) zum Austauschen von Wärme durch Bringen des Dampfs in Kontakt mit der Rückfluß-Flüssigkeit; und
einer Abnahmeleitung (11) zum Abnehmen der Bodenrückstände von einem Bodenabschnitt (5a),
dadurch gekennzeichnet, daß
der Bodenabschnitt (5a) geteilt ist in zumindest zwei Bodentanks (21, 22) mit Überfließoberflächen, welche verschiedene Höhe haben, wobei die Rückfluß-Flüssigkeit von der untersten Platte (3a) in den Bodentank (21) fließt mit einer höheren Überfließ-Oberfläche und die Rückfluß-Flüssigkeit von dem Tank (21) mit der höheren Überfließ-Oberfläche in den Tank (22) mit der niedrigen Überfließ-Oberfläche fließt; und
daß sie eine Einrichtung zum Heizen der Füllmenge in jedem der Bodentanks (21, 22) enthält.

7. Vorrichtung nach Anspruch 6, dadurch gekennzeichnet, daß die Einrichtung zum Heizen der Füllmenge eine Dampfleitung (31, 32) zum Einblasen von Dampf in jeden der Bodentanks (21, 22) umfaßt.

8. Vorrichtung nach Anspruch 6, dadurch gekennzeichnet, daß die Einrichtung zum Heizen der Füllmenge einen Aufkocher (16) umfaßt zum Aufheizen einer Füllmenge, die abgenommen wird von einer Abnahmeleitung (11), wobei der Aufkocher (16) außerhalb der Rektifiziersäule (2a) angeordnet ist, und eine Dampfleitung (31a, 32a) zum Einblasen des Dampfs der Füllmenge, die durch den Aufkocher (16) aufgeheizt wird, in jeden der Bodentanks (21, 22) umfaßt.

9. Vorrichtung nach einem der Ansprüche 6, 7 oder 8, dadurch gekennzeichnet, daß die Platten eine Vielzahl von Dämmen (301 bis 305) haben, die verschieden in der Höhe sind, und eine Überfließflüssigkeit über die Dämme nacheinander fließt.

10. Vorrichtung nach einem der Ansprüche 6 bis 9, dadurch gekennzeichnet, daß der Bodenabschnitt (5a) der Kolonne (2a) in drei Tanks (21, 22, 23) geteilt ist.

## Revendications

1. Un procédé de rectification
comprenant les étapes consistant à :
alimenter en matières premières une colonne de rectification (2a) à partir d'un tuyau d'alimentation en matières premières (4) disposé au niveau intermédiaire de ladite colonne (2a) ;
renvoyer un fluide qui reflue à partir d'un tuyau de refluage (9) disposé à la partie supérieure de ladite colonne (2a) vers ladite colonne (2a) ;
évacuer de la vapeur à partir de la partie supérieure de ladite colonne de rectification (2a), ladite vapeur étant refroidie, une partie de ladite vapeur étant évacuée sous forme de produit et le reste de la vapeur étant utilisé en tant que liquide qui reflue ; et
sortir des déchets de raffinage d'une partie de fond (5a) ;
caractérisé en ce qu'on dirige une retenue d'écoulement à partir d'un réservoir de fond (21) ayant une surface plus élevée d'un liquide vers un réservoir de fond (22) ayant une surface plus basse d'un liquide dans ladite partie de fond (5a) de ladite colonne (2a), ladite partie de fond étant divisée en au moins deux réservoirs de fond (21, 22) ;
en ce qu'on chauffe ladite retenue dans chacun des réservoirs de fond (21, 22) ; en ce qu'on échange de la chaleur en apportant une vapeur produite en chauffant le fond en contact à contre courant avec le liquide qui reflue renvoyé vers la colonne de rectification (2a) sur des plaques (3, 3a) disposées dans ladite colonne de rectification (2a), le liquide qui reflue à partir de la plaque inférieure (3a) s'écoulant vers le réservoir de fond (21) ayant une surface supérieure du liquide.

2. Le procédé selon la revendication 1, caractérisé en ce que lesdits moyens de chauffage de la retenue consistent en un chauffage pour lequel on alimente une énergie de chauffage de 0,8 à 1,2 E/N vers un réservoir de fond, où E est l'énergie totale de chauffage fournie à la retenue et N est le nombre de réservoirs de fond (21, 22).

3. Le procédé selon la revendication 1 ou 2, caractérisé en ce que ledit chauffage de la retenue comprend le fait de chauffer par soufflage un moyen de chauffage sous forme de vapeur dans chacun des réservoirs de fond.

4. Le procédé selon la revendication 3, caractérisé en ce que ledit moyen de chauffage est de la vapeur.

5. Le procédé selon la revendication 1, caractérisé en ce que ledit chauffage de la retenue comprend le fait de chauffer la retenue en utilisant un dispositif de rechauffage (16) disposé hors de la colonne de rectification (2a) et en renvoyant de la vapeur de la retenue dans les réservoirs de fond (21, 22).

6. Un dispositif de rectification (20)
comprenant :
une colonne de rectification (2a) équipée d'un tuyau d'alimentation en matières premières (4) au niveau de sa partie intermédiaire, un tuyau d'écoulement servant à évacuer la vapeur de la partie supérieure de la colonne de rectification (2a), un tuyau de reflux (9) servant à renvoyer le liquide qui reflue vers l'intérieur de ladite colonne (2a) dans la partie supérieure de la colonne de rectification (2a) et des plaques (3, 3a) servant à échanger la chaleur en amenant la vapeur en contact avec le liquide qui reflue ; et
un tuyau d'écoulement de sortie (11) servant à sortir les déchets de raffinage d'une partie de fond (5a),
caractérisé en ce que la partie de fond (5a) est divisée en au moins deux réservoirs de fond (21, 22) ayant des surfaces de trop-plein d'une hauteur différente, dans lesquels le liquide qui reflue de la plaque la plus basse (3a) s'écoule vers le réservoir de fond (21) ayant une surface de trop-plein plus élevée et le liquide qui reflue s'écoule du réservoir (21) ayant le surface de trop-plein plus élevée vers le réservoir (22) ayant la surface de trop-plein plus basse ; et
un moyen de chauffage de la retenue dans chacun des réservoirs de fond (21, 22).

7. Le dispositif selon la revendication 6, caractérisé en ce que ledit moyen de chauffage de ladite retenue comprend un tuyau de vapeur (31, 32) servant à souffler de la vapeur dans chacun des réservoirs de fond (21, 22).

8. Le dispositif selon la revendication 6, caractérisé en ce que ledit moyen de chauffage de ladite retenue comprend un dispositif de rechauffage (16) servant à chauffer une retenue provenant d'un tuyau d'écoulement (11), ledit dispositif de rechauffage (16) étant disposé hors de la colonne de rectification (2a), et un tuyau de vapeur (31a, 32a) servant à souffler la vapeur de retenue chauffée par ledit dispositif de rechauffage (16) dans chacun des réservoirs de fond (21, 22).

9. Le dispositif selon la revendication 6, 7 ou 8, caractérisé en ce que lesdites plaques ont une pluralité de digues (301, 305) d'une hauteur différente, un fluide de trop-plein passant par dessus desdites digues successivement.

10. Le dispositif selon l'une des revendications 6 à 9, caractérisé en ce que la partie de fond (5a) de la colonne (2a) est divisée en trois réservoirs (21, 22, 23).
